# EUROPEAN PATENT SPECIFICATION

(11) **EP 4 029 786 B1**
(45) Date of publication and mention of the grant of the patent: **10.09.2025**
(21) Application number: 21215797.8
(22) Date of filing: 20.12.2021
(51) Int. Cl.: B64D 37/30

(54) **AIRCRAFT WITH HYDROGEN STORAGE TANKS**
FLUGZEUG MIT WASSERSTOFFSPEICHERTANKS
AÉRONEF AVEC DES RÉSERVOIRS DE STOCKAGE D'HYDROGÈNE

(30) Priority: 19.01.2021 GB 202100665
(43) Date of publication of application: 20.07.2022
(60) Divisional application: 24206862.5
(73) Proprietor: Rolls-Royce plc, London N1 9FX (GB)
(72) Inventor: Dean, Eric, Derby, DE24 8BJ (GB)
(74) Representative: Rolls-Royce plc

(56) References cited:
- WO-A1-2021/148335
- FR-A1- 3 100 798
- US-A1- 2004 245 382
- KHANDELWAL BHUPENDRA ET AL: "Hydrogen powered aircraft : The future of air transport", PROGRESS IN AEROSPACE SCIENCES, OXFORD, GB, vol. 60, 22 January 2013 (2013-01-22), pages 45 - 59, XP028556142, ISSN: 0376-0421, DOI: 10.1016/J.PAEROSCI.2012.12.002

## Description

### TECHNICAL FIELD

The invention relates to an aircraft having hydrogen storage tanks, especially tanks for storage of gaseous hydrogen to be used as a fuel for aircraft propulsion, for example by use in a fuel cell system and/or a hydrogen-burning gas turbine engine.

### BACKGROUND

Use of hydrogen as a fuel in transport applications, including aeronautical applications, is of interest due to the absence of carbon dioxide generation at the point of use. However, storage of gaseous hydrogen on an aircraft requires a significantly greater fuel storage volume compared to that of a conventional aircraft. For many flight missions, conventional aircraft designs are therefore not appropriate for hydrogen-fuelled aviation. If a conventional aircraft is fitted with hydrogen storage tanks, the usable volume within the aircraft's interior is substantially reduced if the aircraft is intended to maintain its original range and payload.

US patent application publication US 2004/0245382 A1 discloses an aircraft having an arrangement of three elongate cylindrical nitrogen storage tanks coupled to the exterior of the fuselage of the aircraft and extending parallel thereto. The longitudinal axes of the tanks are co-planar.

An aircraft having three hydrogen storage tanks mounted to the fuselage of the aircraft azimuthally at top dead-centre position but at different longitudinal positions along the fuselage is disclosed in the paper "Hydrogen Powered Aircraft: The Future of Air Transport" by B. Khandelwal et al, Progress in Aerospace Sciences 60 (2013) pp 45-59. A fourth hydrogen storage tank occupies a terminal rear portion of the interior of the fuselage.

### BRIEF SUMMARY

According to the present invention, an aircraft comprises a fuselage and is characterised in that the aircraft comprises first, second, third, fourth and fifth elongate cylindrical hydrogen storage tanks each being mounted to the exterior of the fuselage, extending parallel thereto and being disposed vertically above a horizontal plane containing the wing tips of the aircraft with the aircraft on the ground or in level flight, the first tank being mounted to the exterior of the fuselage at top dead-centre thereof, the second and third tanks each being mounted in contact with the first tank on a respective lateral side thereof and having a common diameter less than that of the first tank, the fourth and fifth tanks being mounted to the fuselage in contact with the second and third tanks respectively and having a common diameter less than that of the second and third tanks, and wherein the aircraft further comprises an aerodynamic fairing, the aerodynamic fairing and the fuselage enclosing the first to fifth hydrogen storage tanks.

The aircraft may further comprise sixth, seventh, eighth and ninth elongate cylindrical hydrogen storage tanks mounted to the exterior of the fuselage, the sixth and seventh tanks being in contact with the fourth and fifth tanks respectively and having a common diameter less than that of the fourth and fifth tanks and the eighth and ninth tanks having a common diameter less than that of the sixth and seventh tanks, the first to ninth tanks being enclosed by the aerodynamic fairing and the fuselage, and the first to ninth tanks being disposed vertically above the horizontal plane containing the wings tips of the aircraft with the aircraft on the ground or in level flight.

The aircraft may comprise at least one of a hydrogen-fuelled fuel-cell system and a hydrogen-burning gas turbine engine, and a conveying system arranged to convey hydrogen from the hydrogen storage tanks to the hydrogen fuel-cell and/or the hydrogen-burning gas turbine engine.

### BRIEF DESCRIPTION OF THE DRAWINGS

Embodiments of the invention are described below by way of example only and with reference to the accompanying drawings in which:
- Figure 1: shows a transverse cross-section of an example aircraft of the invention; and
- Figure 2: shows a longitudinal cross-section of the aircraft of Figure 1.

### DETAILED DESCRIPTION

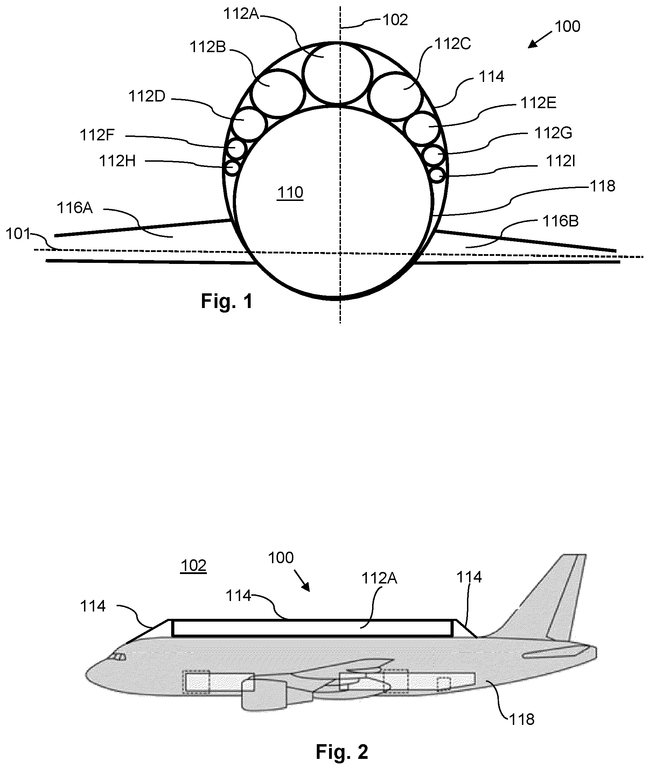

Referring to Figures 1 and 2, an example aircraft 100 of the invention comprises a fuselage 118, wings 116A, 116B, first to ninth elongate generally cylindrical hydrogen storage tanks 112A-I mounted on and extending generally parallel to the fuselage 118 and an aerodynamic fairing 114 which, together with the fuselage 118, encloses the hydrogen storage tanks 112A-I and provides a continuous external air-washed surface of the aircraft 100. With the aircraft on the ground or in level flight, a vertical plane 102 longitudinally bisects both the fuselage 118 and the first hydrogen storage tank 112A, i.e. the first hydrogen storage tank 112A is mounted on the fuselage 118 at top dead-centre thereof. A horizontal plane 101 includes the tips of the wings 116A, 116B. The first to ninth tanks 112A-I are each mounted on the fuselage 118 vertically above the plane 101. The fairing 114 extends fore and aft of the hydrogen storage tanks 112A-I as shown in Figure 2. The interior 110 of the fuselage 118 provides a space for passengers and/or cargo in use of the aircraft 100. The second 112B and third 112C tanks have a common diameter smaller than that of the first tank 112A and are each mounted on the exterior of the fuselage 118 on a respective lateral side of the first tank 112A. The second 112B and third 112C tanks are in contact with the first tank 112A. The fourth and fifth tanks 112D, 112E, the sixth and seventh tanks 112F, 112G and the eighth and ninth tanks 112H, 112I are three pairs of elongate generally cylindrical hydrogen storage tanks, the pairs having respective diameters which progressively decrease moving azimuthally away from the first tank 212A with respect to the fuselage 218, and which each have a smaller diameter than that of the second and third tanks 112B, 112C.

## Claims

1. An aircraft (200) comprising a fuselage (218) and first, second, third, fourth and fifth elongate cylindrical hydrogen storage tanks (212A-E) each being mounted to the exterior of the fuselage, extending parallel thereto and being disposed vertically above a horizontal plane (201) containing the wing tips of the aircraft with the aircraft on the ground or in level flight, the first tank (212A) being mounted to the exterior of the fuselage at top dead-centre thereof, the second and third tanks each being mounted in contact with the first tank on a respective lateral side thereof and having a common diameter less than that of the first tank, the fourth and fifth tanks being mounted to the fuselage in contact with the second and third tanks respectively and having a common diameter less than that of the second and third tanks, and wherein the aircraft further comprises an aerodynamic fairing (214), the aerodynamic fairing and the fuselage enclosing the first to fifth hydrogen storage tanks.

2. An aircraft according to claim 1 further comprising sixth, seventh, eighth and ninth elongate cylindrical hydrogen storage tanks (212F-I) mounted to the exterior of the fuselage and extending parallel thereto, the sixth and seventh tanks being in contact with the fourth and fifth tanks respectively and having a common diameter less than that of the fourth and fifth tanks and the eighth and ninth tanks having a common diameter less than that of the sixth and seventh tanks and being in contact with the sixth and seventh tanks respectively, the first to ninth tanks being enclosed by the aerodynamic fairing and the fuselage, and the first to ninth tanks being disposed vertically above the horizontal plane containing the wings tips of the aircraft with the aircraft on the ground or in level flight.

3. An aircraft according to claim 1 or claim 2 and comprising at least one of a hydrogen-fuelled fuel-cell system and a hydrogen-burning gas turbine engine, and further comprising a conveying system arranged to convey hydrogen from the hydrogen storage tanks to the hydrogen fuel-cell and/or the hydrogen-burning gas turbine engine.

## Patentansprüche

1. Luftfahrzeug (200), umfassend einen Rumpf (218) und einen ersten, einen zweiten, einen dritten, einen vierten und einen fünften länglichen zylindrischen Wasserstoffspeichertank (212A-E), die jeweils an der Außenseite des Rumpfes montiert sind, sich parallel dazu erstrecken und vertikal über einer horizontalen Ebene (201) angeordnet sind, die die Flügelspitzen des Luftfahrzeugs enthält, wenn sich das Luftfahrzeug auf dem Boden oder im Horizontalflug befindet, wobei der erste Tank (212A) an der Außenseite des Rumpfes an dessen oberem Totpunkt montiert ist, wobei der zweite und der dritte Tank jeweils in Kontakt mit dem ersten Tank an einer jeweiligen lateralen Seite davon montiert sind und einen gemeinsamen Durchmesser aufweisen, der kleiner als derjenige des ersten Tanks ist, wobei der vierte und der fünfte Tank in Kontakt mit dem zweiten beziehungsweise dem dritten Tank an dem Rumpf montiert sind und einen gemeinsamen Durchmesser aufweisen, der kleiner als derjenige des zweiten und des dritten Tanks ist, und wobei das Luftfahrzeug ferner eine aerodynamische Verkleidung (214) umfasst, wobei die aerodynamische Verkleidung und der Rumpf den ersten bis fünften Wasserstoffspeichertank umschließen.

2. Luftfahrzeug nach Anspruch 1, ferner umfassend einen sechsten, einen siebten, einen achten und einen neunten länglichen zylindrischen Wasserstoffspeichertank (212F-I), die an der Außenseite des Rumpfes montiert sind und sich parallel dazu erstrecken, wobei der sechste und der siebte Tank mit dem vierten beziehungsweise dem fünften Tank in Kontakt stehen und einen gemeinsamen Durchmesser aufweisen, der kleiner als derjenige des vierten und des fünften Tanks ist, und der achte und der neunte Tank einen gemeinsamen Durchmesser aufweisen, der kleiner als derjenige des sechsten und des siebten Tanks ist, und mit dem sechsten beziehungsweise dem siebten Tank in Kontakt stehen, wobei der erste bis neunte Tank durch die aerodynamische Verkleidung und den Rumpf umschlossen sind und der erste bis neunte Tank vertikal über der horizontalen Ebene angeordnet sind, die die Flügelspitzen des Luftfahrzeugs enthält, wenn sich das Luftfahrzeug auf dem Boden oder im Horizontalflug befindet.

3. Luftfahrzeug nach Anspruch 1 oder Anspruch 2 und umfassend mindestens eines von einem wasserstoffbetriebenen Brennstoffzellensystem und einem wasserstoffverbrennenden Gasturbinentriebwerk und ferner umfassend ein Fördersystem, das arrangiert ist, um Wasserstoff von den Wasserstoffspeichertanks zu der Wasserstoffbrennstoffzelle und/oder dem wasserstoffverbrennenden Gasturbinentriebwerk zu fördern.

## Revendications

1. Aéronef (200) comprenant un fuselage (218) et des premier, deuxième, troisième, quatrième et cinquième réservoirs de stockage d'hydrogène cylindriques allongés (212A à E) étant chacun monté à l'extérieur du fuselage, s'étendant parallèlement à celui-ci et étant disposé verticalement au-dessus d'un plan horizontal (201) contenant les extrémités d'ailes de l'aéronef avec l'aéronef au sol ou en vol en palier, le premier réservoir (212A) étant monté à l'extérieur du fuselage au point mort haut de celui-ci, les deuxième et troisième réservoirs étant chacun montés en contact avec le premier réservoir sur un côté latéral respectif de celui-ci et présentant un diamètre commun inférieur à celui du premier réservoir, les quatrième et cinquième réservoirs étant respectivement montés sur le fuselage en contact avec les deuxième et troisième réservoirs et présentant un diamètre commun inférieur à celui des deuxième et troisième réservoirs, et ledit aéronef comprenant en outre un carénage aérodynamique (214), ledit carénage aérodynamique et ledit fuselage entourant les premier à cinquième réservoirs de stockage d'hydrogène.

2. Aéronef selon la revendication 1, comprenant en outre des sixième, septième, huitième et neuvième réservoirs de stockage d'hydrogène cylindriques allongés (212F à 1) montés à l'extérieur du fuselage et s'étendant parallèlement à celui-ci, les sixième et septième réservoirs étant en contact avec les quatrième et cinquième réservoirs respectivement et présentant un diamètre commun inférieur à celui des quatrième et cinquième réservoirs et les huitième et neuvième réservoirs présentant un diamètre commun inférieur à celui des sixième et septième réservoirs et étant en contact avec les sixième et septième réservoirs respectivement, les premier à neuvième réservoirs étant entourés par le carénage aérodynamique et le fuselage, et les premier à neuvième réservoirs étant disposés verticalement au-dessus du plan horizontal contenant les extrémités d'ailes de l'aéronef avec l'aéronef au sol ou en vol en palier.

3. Aéronef selon la revendication 1 ou la revendication 2 et comprenant au moins un élément parmi un système de pile à combustible alimenté en hydrogène et un moteur à turbine à gaz brûlant de l'hydrogène, et comprenant en outre un système de transport conçu pour transporter de l'hydrogène des réservoirs de stockage d'hydrogène à la pile à combustible à hydrogène et/ou au moteur à turbine à gaz brûlant de l'hydrogène.
